# EUROPÄISCHE PATENTANMELDUNG

(11) **EP 2 292 368 A1**
(43) Veröffentlichungstag der Anmeldung: **09.03.2011**
(21) Anmeldenummer: 09400044.5
(22) Anmeldetag: 08.09.2009
(51) Int. Cl.: B23K 9/32

(54) **Absaugvorrichtung und Schweiß- oder Lötverfahren mit einer Absaugvorrichtung**

(71) Anmelder: EWM Hightec Welding GmbH, 56271 Mündersbach (DE)
(72) Erfinder: Szczesny, Michael, 56235 Ransbach-Baumbach (DE)
(74) Vertreter: Steiniger, Carmen

(57) **Zusammenfassung**

Die vorliegende Erfindung betrifft eine Schweiß- oder Lötvorrichtung (1) und ein Schweiß- oder Lötverfahren mit einer solchen Vorrichtung, die eine Energiequelle (3) zum Schweißen oder Löten, einen Brenner (4), eine Schutzgaszuführung (6) und eine Absaugvorrichtung (2) mit einer Saugeinrichtung, einem Partikelfilter (22) und einem eine Absaugeinheit (9) an dem Brenner (4) und den Partikelfilter (22) verbindenden Saugkanal (23) aufweist, wobei der Schweiß- oder Lötprozess durch eine Steuer- und/oder Regelvorrichtung (10) gesteuert und/oder geregelt wird. Es ist die Aufgabe der vorliegenden Erfindung, eine Schweiß- oder Lötvorrichtung und ein Schweiß- oder Lötverfahren der genannten Gattung zur Verfügung zu stellen, welche bei effizienter Energieausnutzung und minimaler Geräuschbelastung eine zuverlässige Absaugung von beim Schweißen oder Löten entstehenden Abgasen ermöglichen. Die Aufgabe wird einerseits durch eine Schweiß- oder Lötvorrichtung der genannten Gattung gelöst, wobei die Absaugvorrichtung (2) eine Steuer- und/oder Regelvorrichtung (20) aufweist, welche logisch mit der Steuer- und/oder Regelvorrichtung (10) für den Schweiß-oder Lötprozess gekoppelt ist oder welche in der Steuer- und/oder Regelvorrichtung für den Schweiß- oder Lötprozess integriert ist. Die Aufgabe wird ferner durch ein Schweiß- oder Lötverfahren der oben genannten Gattung gelöst, wobei der Absaugprozess der Absaugvorrichtung durch eine Steuer- und/oder Regelvorrichtung logisch mit der Steuerung des Schweiß- oder Lötprozesses gekoppelt gesteuert und/oder geregelt wird.

## Beschreibung

Die vorliegende Erfindung betrifft eine Schweiß- oder Lötvorrichtung und ein Schweißoder Lötverfahren mit einer solchen Vorrichtung, die eine Energiequelle zum Schweißen oder Löten, einen Brenner, eine Schutzgaszuführung und eine Absaugvorrichtung mit einer Saugeinrichtung, einem Partikelfilter und einem eine Absaugeinheit an dem Brenner und den Partikelfilter verbindenden Saugkanal aufweist, wobei der Schweiß- oder Lötprozess durch eine Steuer- und/oder Regelvorrichtung gesteuert und/oder geregelt wird.

Beim Löten oder Schweißen, wie beispielsweise beim elektrischen Lichtbogenschweißen von Metallen, entstehen in Abhängigkeit von der Zusammensetzung und der Verunreinigung der zu schweißenden oder zu lötenden Materialien mehr oder weniger große Mengen an teilweise gesundheitsschädlichen Abgasen oder Rauchen, welche nicht nur die Sicht zur Schweiß- oder Lötstelle beeinträchtigen, sondern auch beim Benutzer der Schweiß- oder Lötvorrichtung starke gesundheitliche Schäden hervorrufen können, da Augen und Atmungsorgane gereizt werden. Entsprechend wurden in der Praxis bereits verschiedene Vorrichtungen und Verfahren entwickelt, welche eine Absaugung der Abgase möglichst nahe an ihrer Entstehungsstelle am Brenner ermöglichen.

So ist aus der Druckschrift DE 89 15 823.7 U1 eine Schweißvorrichtung und ein Schweißverfahren der oben genannten Gattung mit einer Absaugvorrichtung in Form einer an der Schweißstelle platzierbaren Absaughaube bekannt. An der Absaughaube ist eine Absaugleitung angebracht, welche mit einem Absauggebläse verbunden ist, wobei die Absaugleitung und das Gebläse mit einem Filter in Verbindung stehen. Die Absaugvorrichtung ist gemäß einer Ausführungsform dieser Druckschrift Teil einer Schweißvorrichtung mit einem Schweißtransformator, der in einem fahrbaren Gehäuse angeordnet ist, mit dem die gesamte Absaugvorrichtung fest verbunden ist. Für den Schweißtransformator und für das Absauggebläse ist eine gemeinsame elektrische Stromzuführungsleitung zum Gehäuse vorgesehen. Indem der Schweißtransformator und die Absaugvorrichtung als Einheit ausgebildet sind, kann diese einfach und raumsparend an die jeweiligen Einsatzplätze gefahren werden.

Typischerweise werden derartige Absaugvorrichtungen zu Beginn des Schweißprozesses angeschaltet und nach dessen Abschluss abgeschaltet, wobei je nach subjektiv zu erwartender Menge an abzusaugenden gasförmigen Schadstoffen die Absaugleistung voreingestellt wird. Auf diese Weise verbrauchen die bekannten Absaugvorrichtungen unabhängig davon, welche Abgase beim Schweißen tatsächlich entstehen, relativ viel Energie. Darüber hinaus ist die dauerhafte Absaugung mit einer kontinuierlichen Geräuschbelastung sowohl für den Benutzer als auch für die Umgebung verbunden.

Es ist daher die Aufgabe der vorliegenden Erfindung, eine Schweiß- oder Lötvorrichtung und ein Schweiß- oder Lötverfahren der oben genannten Gattung zur Verfügung zu stellen, welche bei effizienter Energieausnutzung und minimaler Geräuschbelastung eine zuverlässige Absaugung von beim Schweißen oder Löten entstehenden Abgasen ermöglichen.

Die Aufgabe wird einerseits durch eine Schweiß- oder Lötvorrichtung mit einer Energiequelle zum Schweißen oder Löten, einem Brenner, einer Schutzgaszuführung, einer Steuer- und/oder Regelvorrichtung für den Schweiß- oder Lötprozess und einer Absaugvorrichtung, welche eine Saugeinrichtung, einen Partikelfilter und einen eine Absaugeinheit an dem Brenner und den Partikelfilter verbindenden Saugkanal aufweist, gelöst, wobei die Absaugvorrichtung eine Steuer- und/oder Regelvorrichtung aufweist, welche logisch mit der Steuer- und/oder Regelvorrichtung für den Schweiß- oder Lötprozess gekoppelt ist oder welche in der Steuer- und/oder Regelvorrichtung für den Schweiß- oder Lötprozess integriert ist.

Durch die Kopplung der Steuer- und/oder Regelvorrichtung für den Schweiß- oder Lötprozess mit der Steuer- und/oder Regelvorrichtung der Absaugvorrichtung kann die Absaugung exakt an den Schweiß- oder Lötprozess angepasst werden. So kann die Absaugvorrichtung dann eingeschaltet werden, wenn der Schweiß- oder Lötprozess begonnen hat, und kann sofort abgeschaltet werden, wenn der Schweiß- oder Lötprozess beendet ist. Ferner kann die Absaugung in Abhängigkeit von der Art und den Parametern des Schweiß- oder Lötprozesses gesteuert und/oder geregelt werden. Auf diese Weise kann die erfindungsgemäße Schweiß- oder Lötvorrichtung mit einer modularen Absaugvorrichtung und mit einer optimalen Energieausnutzung und verringerter, weil nicht dauerhafter Geräuschbelastung zur Verfügung gestellt werden.

In einer vorteilhaften Ausführungsform der vorliegenden Erfindung weisen die Steuerund/oder Regelvorrichtung für den Schweiß- oder Lötprozess und die Steuer- und/oder Regelvorrichtung der Absaugvorrichtung eine gemeinsame Energieversorgungsleitung auf und sind über wenigstens eine Steuerleitung und/oder Funkverbindung miteinander verbunden. Durch die gemeinsame Energieversorgungsleitung können beide Steuerund/oder Regelvorrichtungen zeitgleich mit Energie versorgt werden, ohne dass für die Steuer- und/oder Regelvorrichtung der Absaugvorrichtung ein separater Energieversorgungsanschluss notwendig ist. Entsprechend kann die erfindungsgemäße Schweiß- oder Lötvorrichtung besonders kompakt und energieeffizient gestaltet werden. Darüber hinaus ermöglicht die Steuerleitung und/oder die Funkverbindung zwischen den beiden Steuerund/oder Regelvorrichtungen einen effektiven kontinuierlichen Datenaustausch, sodass die Absaugung effektiv an den Schweiß- oder Lötprozess angepasst werden kann.

Gemäß einer günstigen Variante der vorliegenden Erfindung ist an der Energiequelle zum Schweißen oder Löten eine Bedieneinheit mit wenigstens einem Einstellmodul für wenigstens einen Parameter der Absaugvorrichtung vorgesehen. Somit können beispielsweise Parameter wie die Absaugleistung und der Schaltzustand der Absaugvorrichtung besonders einfach über die Bedieneinheit an der Energiequelle zum Schweißen oder Löten eingestellt werden.

In einem bevorzugten Beispiel der vorliegenden Erfindung weist die Steuer- und/oder Regelvorrichtung der Absaugvorrichtung eine Partikelfilterüberwachungseinrichtung auf. Durch die Partikelfilterüberwachungseinrichtung kann der Zustand des Partikelfilters überwacht und abgefragt werden, um die Funktionstüchtigkeit der Absaugvorrichtung prüfen zu können und rechtzeitig Filterwechsel vornehmen zu können.

Es ist besonders von Vorteil, wenn die Partikelfilterüberwachungseinrichtung mit einer Anzeigevorrichtung und/oder einer Benutzungssperrvorrichtung an der Energiequelle zum Schweißen oder Löten gekoppelt ist. Auf der Anzeigevorrichtung kann beispielsweise ein notwendiger Filterwechsel rechtzeitig angezeigt werden. Darüber hinaus kann durch die Benutzungssperrvorrichtung bei einem zugesetzten Partikelfilter die Schweiß-oder Lötvorrichtung für den Benutzer solange gesperrt werden, bis der Partikelfilter ausgetauscht ist. So kann eine Gefährdung durch schädliche Gase effektiv verhindert werden.

Die Aufgabe wird ferner durch ein Schweiß- oder Lötverfahren mit einer Schweiß- oder Lötvorrichtung, die eine Energiequelle zum Schweißen oder Löten, einen Brenner, eine Schutzgaszuführung und eine Absaugvorrichtung mit einer Saugeinrichtung, einem Partikelfilter und einem eine Absaugeinheit an dem Brenner und den Partikelfilter verbindenden Saugkanal aufweist, gelöst, wobei der Schweiß- oder Lötprozess durch eine Steuer- und/oder Regelvorrichtung gesteuert und/oder geregelt wird, und wobei der Absaugprozess der Absaugvorrichtung durch eine Steuer- und/oder Regelvorrichtung logisch mit der Steuerung des Schweiß- oder Lötprozesses gekoppelt gesteuert und/oder geregelt wird.

Das erfindungsgemäße Schweiß- oder Lötverfahren ermöglicht eine an den jeweiligen Schweiß- oder Lötprozess angepasste Absaugung von schädlichen Gasen während des Schweiß- oder Lötprozesses. Dabei kann die Absaugung so gestaltet werden, dass nur dann abgesaugt wird, wenn beim Schweiß- oder Lötprozess tatsächlich schädliche Abgase entstehen können. Entsprechend ist es erfindungsgemäß möglich, die für die Absaugung notwendige Energie und die mit dem Absaugen verbundene Geräuschbelastung auf ein Minimum abzusenken.

In einem bevorzugten Ausführungsbeispiel der vorliegenden Erfindung wird mit einer an der Energiequelle zum Schweißen oder Löten vorgesehenen Bedieneinheit wenigstens ein Parameter der Absaugvorrichtung eingestellt. Damit hat der Nutzer der Schweiß-oder Lötvorrichtung die Möglichkeit, sowohl vor, während als auch nach dem Schweiß-oder Lötprozess die Parameter der Absaugvorrichtung vorzugeben.

Es hat sich als besonders günstig erwiesen, wenn eine Absaugleistung und/oder der Schaltzustand der Absaugvorrichtung mit der Bedieneinheit eingestellt wird. Somit kann die Absaugleistung direkt in Abhängigkeit von den jeweiligen Parametern des Schweiß-oder Lötprozesses verändert oder kontinuierlich auf einem Wert gehalten werden. Ferner kann die Absaugvorrichtung, wenn erforderlich, an- bzw. abgeschaltet werden. Vorzugsweise wird der Zustand des Partikelfilters durch eine Partikelfilterüberwachungseinheit der Steuer- und/oder Regelvorrichtung der Absaugvorrichtung überwacht. So kann relativ schnell reagiert werden, wenn der Partikelfilter zugesetzt ist und dieser ausgetauscht werden muss.

Hierbei ist es besonders von Vorteil, wenn der Zustand des Partikelfilters durch eine Anzeigevorrichtung an der Energiequelle zum Schweißen oder Löten angezeigt wird. Dies erleichtert es dem Benutzer der Schweiß- oder Lötvorrichtung, den jeweiligen Zustand des Partikelfilters festzustellen und gegebenenfalls darauf zu reagieren.

In einem weiteren geeigneten Ausführungsbeispiel der vorliegenden Erfindung übergibt die Partikelfilterüberwachungseinheit bei einem notwendigen Filterwechsel ein Signal an die Steuer- und/oder Regelvorrichtung für den Schweiß- oder Lötprozess, welche eine Benutzungssperrung der Schweiß- oder Lötvorrichtung bewirkt. Hierdurch kann die Schweiß- oder Lötvorrichtung solange für den Benutzer gesperrt werden, bis der Partikelfilter ausgetauscht ist.

In einer weiteren Variante der vorliegenden Erfindung wird die Absaugvorrichtung durch die Steuer- und/oder Regelvorrichtung so programmiert, dass die Absaugvorrichtung nur zu bestimmten Zeiten und/oder für eine bestimmte Zeitdauer an- oder abgeschaltet wird. Dadurch kann Energie gespart und die Geräuschbelastung für den Benutzer verringert werden.

Um eine gegenseitige Störung der beiden Steuer- und/oder Regelvorrichtungen zu vermeiden, kann vorgesehen sein, dass durch die Kopplung der Steuer- und/oder Regelvorrichtungen für den Schweiß- oder Lötprozess und die Absaugvorrichtung eine separate Bedienung der Absaugvorrichtung über eine Bedienvorrichtung an der Absaugvorrichtung verhindert wird.

Gemäß einem weiteren Aspekt der vorliegenden Erfindung wird die Absaugleistung der Absaugvorrichtung durch die Steuer- und/oder Regelvorrichtung in Abhängigkeit von Parametern des Schweiß- oder Lötprozesses eingestellt. Auf diese Weise kann eine optimale Absaugung bei gleichzeitig hoher Energieeffizienz und minimierter Geräuschbelastung zur Verfügung gestellt werden.

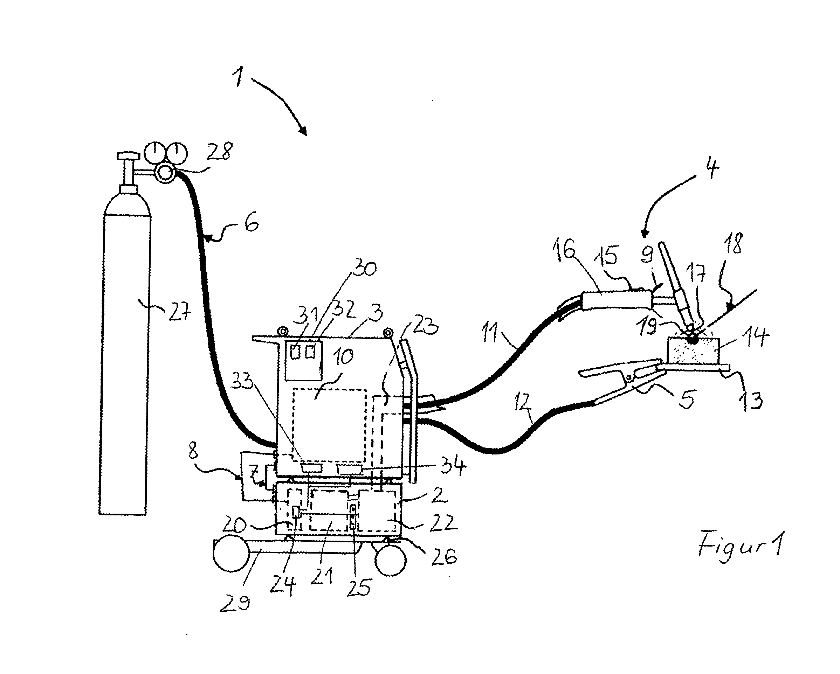

Eine bevorzugte Ausführungsform der vorliegenden Erfindung, deren Aufbau, Funktion und Vorteile wird im Folgenden anhand der Figur näher erläutert, wobei
- Figur 1: schematisch eine Ausführungsform der erfindungsgemäßen Schweiß- oder Lötvorrichtung mit einer modularen Absaugvorrichtung zeigt.

Fig. 1 zeigt schematisch eine mögliche Ausführungsform einer erfindungsgemäßen Schweißvorrichtung 1.

Die Schweißvorrichtung 1 weist eine Energiequelle 3 in Form einer Schweißstromquelle auf. Die Energiequelle 3 ist über eine Schutzgaszuführungsleitung 6 mit einem Schutzgasspeicher 27 verbunden, wobei das in dem Schutzgasspeicher 27 enthaltene Schutzgas über eine Armatur 28 an dem Schutzgasspeicher 27 einstellbar dem Schweißprozess zugeführt werden kann.

Mit der Energiequelle 3 ist ein Brenner 4 über ein Versorgungskabel 11 verbunden. Ferner ist die Energiequelle 3 über ein weiteres Versorgungskabel 12 mit einer Klemme 5 verbunden, welche an eine Werkstückauflage 13 geklemmt ist. Durch die Klemme 5 kann die Werkstückauflage 13 auf Masse gelegt werden. Auf der Werkstückauflage 13 befindet sich ein Werkstück 14, welches durch die Schweißvorrichtung 1 geschweißt wird. Hierfür weist der Brenner 4 eine Schweißelektrode 17 auf, durch welche zwischen der Schweißelektrode 17 und dem Werkstück 14 in dem in Fig. 1 gezeigten Ausführungsbeispiel ein Lichtbogen 19 erzeugt werden kann. Zum Erzeugen einer Schweißnaht wird ferner während des Schweißens, wie es in Fig. 1 schematisch angedeutet ist, ein Schweißzusatzwerkstoff bzw. Schweißdraht 18 der Schweißstelle zugeführt.

Die erfindungsgemäße Schweißvorrichtung 1 weist ferner eine am Brenner 4 vorgesehene Absaugeinheit 9 einer zu der erfindungsgemäßen Schweißvorrichtung 1 gehörenden modularen Absaugvorrichtung 2 auf. Die Abgaseinheit 9 ist vorzugsweise in der Nähe der Schweißstelle an dem Werkstück 14 plazierbar ist und derart ausgebildet ist, dass durch die Absaugeinheit 9 beim Schweißen entstehende Gase oder Rauche abgesaugt werden können.

Die Absaugeinheit 9 kann hierbei beispielsweise schirm- oder glockenartig oberhalb der Schweißstelle an dem Werkstück 14 angeordnet sein. Grundsätzlich sind jedoch auch andere konstruktive Ausbildungen und beispielsweise auch eine Anordnung der Absaugeinheit 9 seitlich oder bei geringen Werkstückdimensionen auch unterhalb des Werkstückes 14 möglich. Die Absaugeinheit 9 befindet sich in dem in Fig. 1 dargestellten Ausführungsbeispiel an dem Griff 16, kann jedoch auch als separater Schirm an bzw. über einer Führung für die Schweißelektrode 17 vorgesehen sein.

Die Absaugeinheit 9 ist über einen Absaugkanal 23 mit einem Partikelfilter 22 verbunden, wobei der Absaugkanal 23 und der Partikelfilter 22 ebenfalls zu der modularen Absaugvorrichtung 2 der erfindungsgemäßen Schweißvorrichtung 1 gehören.

Die Absaugvorrichtung 2 kann beispielsweise in einem separaten Gehäuse untergebracht sein, welches beispielsweise durch eine Schnappvorrichtung 26 mit einer fahrbaren Vorrichtung 29 gekoppelt werden kann. Darüber hinaus kann, wie in Fig. 1 gezeigt, die Absaugvorrichtung 2 mit einem Gehäuse der Energiequelle 3 gekoppelt werden, sodass auch die Energiequelle 3 auf der fahrbaren Vorrichtung 29 angeordnet werden kann und dadurch sowohl die Energiequelle 3 als auch die Absaugvorrichtung 2 mobil transportabel sind. Grundsätzlich ist es in anderen, nicht gezeigten Ausführungsvarianten der Erfindung jedoch auch möglich, dass sowohl die Energiequelle 3 als auch die Absaugvorrichtung 2 fest an einer Stelle installiert werden.

In dem Partikelfilter 22 können Partikel oder schädliche Gase, die in den von der Absaugeinheit 9 an der Schweißstelle abgesaugten Gase oder Rauche enthalten sind, aufgefangen werden. Die Absaugvorrichtung 2 weist dabei einen in Fig. 1 nicht dargestellten Gasauslass auf, durch welchen von Partikeln und Schadstoffen befreite abgesaugte Luft wieder nach außen abgegeben werden kann. Der Partikelfilter 22 kann beispielsweise in Form eines Zyklons ausgebildet sein. Er kann darüber hinaus mit einem Kohlefilter oder mit einem Nassabscheider ausgestattet sein.

Der Partikelfilter 22 ist mit einer Saugeinrichtung 21 der Absaugvorrichtung 2 gekoppelt, welche typischerweise eine Pumpeinheit ist, in welcher der nötige Unterdruck erzeugt wird, um Gase oder Rauche durch die Absaugeinheit 9 nahe der Schweißstelle aufnehmen, durch den Absaugkanal 23 zu dem Partikelfilter 22 strömen lassen zu können und letztendlich wieder schadstoffbefreit nach außen abgeben zu können.

Die Absaugvorrichtung 2 weist eine Steuer- und/oder Regelvorrichtung 20 auf, welche über eine Steuerleitung 8 und/oder eine Funkverbindung mit einer Steuer- und/oder Regelvorrichtung 10 für den Schweißprozess, welche in oder an der Energiequelle 3 vorgesehen ist, verbunden ist. Darüber hinaus weisen die Steuer- und/oder Regelvorrichtungen 10, 20 in dem in Fig. 1 dargestellten Ausführungsbeispiel eine gemeinsame Energieversorgungsleitung 7 auf, durch welche sie gleichzeitig mit Energie versorgt werden können.

Die Steuer- und/oder Regelvorrichtung 20 für die Absaugvorrichtung 2 weist eine Partikelfilterüberwachungseinrichtung 24 auf, die mit dem Partikelfilter 22 und darüber hinaus mit einer Anzeigevorrichtung 33 und einer Benutzungssperrvorrichtung 34 in oder an der Energiequelle 3 gekoppelt ist. Durch die Anzeigevorrichtung 33 kann beispielweise angezeigt werden, ob der Partikelfilter 22 zugesetzt ist beziehungsweise ob ein Austausch des Partikelfilters 22 erforderlich ist. Durch die Kopplung der Partikelfilterüberwachungseinrichtung 24 mit der Benutzungssperrvorrichtung 34 kann bei zugesetztem Partikelfilter 22 eine Sperrung der Benutzung der Schweißvorrichtung 1 durch den Benutzer ausgelöst werden, wobei eine Benutzung erst dann wieder möglich ist, wenn ein zugesetzter Partikelfilter 22 durch einen neuen, nicht zugesetzten Partikelfilter 22 ausgetauscht worden ist.

An der Absaugvorrichtung 2 ist eine Bedienvorrichtung 25 vorgesehen, durch welche die Absaugvorrichtung 2 dann, wenn sie nicht mit der Steuer- und/oder Regelvorrichtung 10 über ihre Steuer- und/oder Regelvorrichtung 20 gekoppelt ist, separat bedienbar ist. Sobald die Steuer- und/oder Regelvorrichtung 10 für den Schweißprozess und die Steuerund/oder Regelvorrichtung 20 für die Absaugvorrichtung 2 miteinander, wie in Fig. 1 gezeigt, gekoppelt sind, wird in dem gezeigten Ausführungsbeispiel infolge der Kopplung eine separate Bedienung der Absaugvorrichtung 2 über die Bedienvorrichtung 25 an der Absaugvorrichtung verhindert. Somit kann die optimal über die Steuer- und/oder Regelvorrichtungen 10, 20 eingestellte, an den Schweißprozess angepasste Absaugung nicht durch manuelle Fehlbedienungen gestört werden.

Die Steuer- und/oder Regelvorrichtung 10, die in oder an der Energiequelle 3 vorgesehen ist, dient der Einstellung der Energie- und Schweißparameter für den Schweißprozess. Durch die gekoppelten Steuer- und/oder Regelvorrichtung 10, 20 kann zudem die Absaugleistung und/oder der Schalt- beziehungsweise Betriebszustand der Absaugvorrichtung 2 in Abhängigkeit von Parametern des Schweißprozesses eingestellt werden. In dem in Fig. 1 dargestellten Ausführungsbeispiel wird die Absaugvorrichtung 2 beispielsweise durch die Steuer- und/oder Regelvorrichtungen 10, 20 so gesteuert oder geregelt, dass die Absaugvorrichtung 2 nur zu bestimmten Zeiten und/oder für eine bestimmte Zeitdauer an- oder abgeschaltet wird. Auf diese Weise kann Energie zum Betreiben der Absaugvorrichtung 2 gespart werden und eine in Verbindung mit dem Betreiben der Absaugvorrichtung 2 entstehende Lärmbelastung minimiert werden.

An der Energiequelle 3 ist eine Bedieneinheit 30 vorgesehen, welche verschiedene Einstellmodule 31, 32 aufweist. Durch die Einstellmodule 31, 32 kann wenigstens ein Parameter der Absaugvorrichtung 2, wie beispielsweise deren Absaugleistung und/oder deren Schaltzustand, eingestellt werden.

Somit sind erfindungsgemäß die Steuer- und/oder Regelvorrichtung 10 für den Schweißprozess und die Steuer- und/oder Regelvorrichtung 20 für die Absaugvorrichtung 2 logisch miteinander gekoppelt, sodass die Absaugung ideal an den Schweißprozess angepasst werden kann.

Obwohl in dem Ausführungsbeispiel von Fig. 1 die Steuer- und/oder Regelvorrichtung 10 für den Schweißprozess und die Steuer- und/oder Regelvorrichtung 20 für die Absaugvorrichtung 2 als separate Elemente dargestellt sind, können die beiden Steuerund/oder Regelvorrichtungen 10, 20 als miteinander verbundene bzw. ineinander integrierte Steuer- und/oder Regelvorrichtungen 10, 20 ausgebildet sein.

Ferner sei darauf verwiesen, dass, obwohl Fig. 1 die Erfindung anhand einer Schweißvorrichtung 1 darstellt, das gleiche Prinzip auch für eine Lötvorrichtung oder eine kombinierte Schweiß- und Lötvorrichtung angewendet werden kann, wobei ebenfalls die Absaugung an den Löt- bzw. Schweiß/Lötpozess optimal anpassbar ist.

## Patentansprüche

1. Schweiß- oder Lötvorrichtung (1) mit einer Energiequelle (3) zum Schweißen oder Löten, einem Brenner (4), einer Schutzgaszuführung (6), einer Steuer- und/oder Regelvorrichtung (10) für den Schweiß- oder Lötprozess und einer Absaugvorrichtung (2), welche eine Saugeinrichtung (21), einen Partikelfilter (22) und einen eine Absaugeinheit (9) an dem Brenner (4) und den Partikelfilter (22) verbindenden Saugkanal (23) aufweist,
**dadurch gekennzeichnet,**
**dass** die Absaugvorrichtung (2) eine Steuer- und/oder Regelvorrichtung (20) aufweist, welche logisch mit der Steuer- und/oder Regelvorrichtung (10) für den Schweiß- oder Lötprozess gekoppelt ist oder welche in der Steuer- und/oder Regelvorrichtung (10) für den Schweiß- oder Lötprozess integriert ist.

2. Schweiß- oder Lötvorrichtung nach Anspruch 1, **dadurch gekennzeichnet, dass** die Steuer- und/oder Regelvorrichtung (10) für den Schweiß- oder Lötprozess und die Steuer- und/oder Regelvorrichtung (20) der Absaugvorrichtung (2) eine gemeinsame Energieversorgungsleitung (7) aufweisen und über wenigstens eine Steuerleitung (8) und/oder Funkverbindung miteinander verbunden sind.

3. Schweiß- oder Lötvorrichtung nach Anspruch 1 oder 2, **dadurch gekennzeichnet, dass** an der Energiequelle (3) zum Schweißen oder Löten eine Bedieneinheit (30) mit wenigstens einem Einstellmodul (31, 32) für wenigstens einen Parameter der Absaugvorrichtung (2) vorgesehen ist.

4. Schweiß- oder Lötvorrichtung nach einem der vorhergehenden Ansprüche, **dadurch gekennzeichnet, dass** die Steuer- und/oder Regelvorrichtung (20) der Absaugvorrichtung (2) eine Partikelfilterüberwachungseinrichtung (24) aufweist.

5. Schweiß- oder Lötvorrichtung nach Anspruch 4, **dadurch gekennzeichnet, dass** die Partikelfilterüberwachungseinrichtung (24) mit einer Anzeigevorrichtung (33) und/oder einer Benutzungssperrvorrichtung (34) an der Energiequelle (3) zum Schweißen oder Löten gekoppelt ist.

6. Schweiß- oder Lötverfahren mit einer Schweiß- oder Lötvorrichtung (1), die eine Energiequelle (3) zum Schweißen oder Löten, einen Brenner (4), eine Schutzgaszuführung (6) und eine Absaugvorrichtung (2) mit einer Saugeinrichtung (21), einem Partikelfilter (22) und einem eine Absaugeinheit (9) an dem Brenner (3) und den Partikelfilter (22) verbindenden Saugkanal (23) aufweist, wobei der Schweiß-oder Lötprozess durch eine Steuer- und/oder Regelvorrichtung (10) gesteuert und/oder geregelt wird,
**dadurch gekennzeichnet,**
**dass** der Absaugprozess der Absaugvorrichtung (2) durch eine Steuer- und/oder Regelvorrichtung (20) logisch mit der Steuerung (10) des Schweiß- oder Lötprozesses gekoppelt gesteuert und/oder geregelt wird.

7. Schweiß- oder Lötverfahren nach Anspruch 6, **dadurch gekennzeichnet, dass** mit einer an der Energiequelle (3) zum Schweißen oder Löten vorgesehenen Bedieneinheit (30) wenigstens ein Parameter der Absaugvorrichtung (2) eingestellt wird.

8. Schweiß- oder Lötverfahren nach Anspruch 6 oder 7, **dadurch gekennzeichnet, dass** eine Absaugleistung und/oder der Schaltzustand der Absaugvorrichtung (2) mit der Bedieneinheit (30) eingestellt wird.

9. Schweiß- oder Lötverfahren nach einem der Ansprüche 6 bis 8, **dadurch gekennzeichnet, dass** der Zustand des Partikelfilters (22) durch eine Partikelfilterüberwachungseinheit (24) der Steuer- und/oder Regelvorrichtung (20) der Absaugvorrichtung (2) überwacht wird.

10. Schweiß- oder Lötverfahren nach Anspruch 9, **dadurch gekennzeichnet, dass** der Zustand des Partikelfilters (22) durch eine Anzeigevorrichtung (33) an der Energiequelle (3) zum Schweißen oder Löten angezeigt wird.

11. Schweiß- oder Lötverfahren nach Anspruch 9 oder 10, **dadurch gekennzeichnet, dass** die Partikelfilterüberwachungseinheit (24) bei einem notwendigen Filterwechsel ein Signal an die Steuer- und/oder Regelvorrichtung (10) für den Schweiß- oder Lötprozess übergibt, welche eine Benutzungssperrung der Schweiß- oder Lötvorrichtung (1) bewirkt.

12. Schweiß- oder Lötverfahren nach einem der Ansprüche 6 bis 11, **dadurch gekennzeichnet, dass** die Absaugvorrichtung (2) durch die Steuer- und/oder Regelvorrichtung (10, 20) so programmiert wird, dass die Absaugvorrichtung (2) nur zu bestimmten Zeiten und/oder für eine bestimmte Zeitdauer an- oder abgeschaltet wird.

13. Schweiß- oder Lötverfahren nach einem der Ansprüche 6 bis 12, **dadurch gekennzeichnet, dass** durch die Kopplung der Steuer- und/oder Regelvorrichtungen (10, 20) für den Schweiß- oder Lötprozess und die Absaugvorrichtung (2) eine separate Bedienung der Absaugvorrichtung (2) über eine Bedienvorrichtung (25) an der Absaugvorrichtung (2) verhindert wird.

14. Schweiß- oder Lötverfahren nach einem der Ansprüche 6 bis 13, **dadurch gekennzeichnet, dass** eine Absaugleistung der Absaugvorrichtung (2) durch die Steuer- und/oder Regelvorrichtung (10, 20) in Abhängigkeit von Parametern des Schweiß- oder Lötprozesses eingestellt wird.
